# EUROPEAN PATENT SPECIFICATION

(11) **EP 1 390 860 B1**
(45) Date of publication and mention of the grant of the patent: **27.05.2015**
(21) Application number: 02764328.7
(22) Date of filing: 25.04.2002
(51) Int. Cl.: G06F 15/00, G06F 15/16, G06F 17/30, G06F 9/44

(54) **PERSONALIZATION SERVER UNIFIED USER PROFILE**
VEREINIGTES BENUTZERPROFIL EINES PERSONALISIERUNGSSERVERS
PROFIL UTILISATEUR UNIFIE POUR SERVEUR DE PERSONNALISATION

(30) Priority: 25.04.2001 US 286466 P; 13.12.2001 US 21855
(43) Date of publication of application: 25.02.2004
(73) Proprietor: Oracle International Corporation, Redwood Shores, CA 94065 (US)
(72) Inventor: BISSON, Michel, Boulder, CO 80301 (US); BREEDEN, Timothy, Broomfield, CO 80020 (US); PACLAT, Charles, Medford, MA 02155 (US); STAMM, Tom, Louisville, CO 80027 (US); WILLCOX, Steven, Boulder, CO 80302 (US)
(74) Representative: Davies, Simon Robert
(86) International application number: PCT/US2002/012909
(87) International publication number: WO 2002/086738

(56) References cited:
- US-A- 5 754 939
- US-A- 5 812 865
- US-A- 5 813 006
- US-A- 5 875 327
- US-B1- 6 195 651
- US-B1- 6 199 099

## Description

### CLAIM OF PRIORITY

This application claims priority to U.S. Provisional patent application No. 60/286,466, filed April 25, 2001, entitled PERSONALIZATION SERVER UNIFIED USER PROFILE-and US application No. 10/021,855 published as US2003/065670.

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Field of the Invention:

The present invention relates generally to the integration of data from multiple sources.

### Background of the Invention:

Corporations are continually looking for better ways to integrate new information with their existing data, such as information relating to current and prospective customers that may be acquired from third party sources. To make such integration effective, a company must be able to streamline the integration process, eliminate unnecessary cost or purchases, and eliminate the downtime that is typically necessary to implement a new data system or modify existing data structures.

As an example, a corporation may wish to incorporate additional user profile data into their established user data. This additional profile data may be configured and maintained by a separate source, such as a personalization server. The corporation often has pre-existing corporate customer or user data that is outside the scope of the personalization server. This data, which typically lives in an existing corporate database, may include, for each customer, information such as name, social security number, and/or company-particular information such as frequent flyer miles for a particular airline. The corporation would like to integrate this data seamlessly into their personalization solution, avoiding data migration difficulties where possible.

It is therefore an object of the invention to develop a seamless approach to the integration of data from an existing data source with data from an external source.

US 5875327 discloses a system and method for workstation configuration that includes a hierarchy management of preferences that are managed and stored with a file server. Preference files are read in order to use the information within those files to configure a workstation.

### SUMMARY OF THE INVENTION

According to the invention, a method with the features of claim 1, a computer readable medium with the features of claim 3 and a computer-based system with the features of claim 4 are provided.

A further embodiment of the invention is defined by the dependent claim.

### Brief Description of the Figures:

**Figure 1** is an illustration of a UUP configuration in accordance with one embodiment of the invention.
**Figure 2** is an illustration of a UUP configuration in accordance with one embodiment of the invention.
**Figure 3** is an illustration of a UUP configuration in accordance with one embodiment of the invention.
**Figure 4** is an illustration of a UUP configuration in accordance with one embodiment of the invention.
**Figures 5(a)** and **5(b)** are flowcharts showing steps for calling a setUserPoints() method for implicit and explict cases, in accordance with one embodiment of the present invention.
**Figure 6** is a flowchart showing steps for operating an ejbFind routine in accordance with one embodiment of the present invention.

### Detailed Description of the Invention

In accordance with the foregoing summary of the invention, the following presents a detailed description of an embodiment of the present invention, which is presently considered to be the best mode.

An architecture of the present invention defines the way in which existing user data may be incorporated with more dynamically-changing personalization data. In a server, such as a personalization server that is used to personalize content or services for a particular use or group of users, system users are typically represented by user profiles. A user profile provides an ID for a user and access to the properties of a user, such as age or email address. Property values can be single-valued or multi-valued, and may be requested via a *getProperty()* function or similar method which takes a property name as a key.

An advantage of a user profile of the present invention is that it may be extended and customized to retrieve user information from an existing data source. For example, a user profile that ships with a server or solution, such as a personalization server, may combine user properties, such as properties from a personalization server database with user properties from an LDAP server or legacy database as are known in the art, into a single user profile for use within an application. Developers and system users then need not worry about the different underlying data sources. The user profile is the only place necessary to go for user information.

A unified user profile (UUP) of the present invention includes this aggregation of properties from an existing data source and the personalization server database tables into a single, customized user profile. More specifically, a UUP marries existing user/customer data by extending a user component. By installing the personalization server database tables into the existing database instance and extending a user implementation, developers can quickly create a customized UUP that is capable of retrieving properties from, and storing/updating properties to, an existing database. This flexibility is desirable because it allows access to existing data without any migration of data or disruption of existing applications using that data. It should be understood, however, that existing data may be migrated into a separate personalization server database instance if desired.

One primary advantage of the UUP as compared to other server solutions is that the UUP requires no database scheme updates or data migration within a data management system, such as a customer Relational Database Management System (RDBMS). The UUP is preferably created by writing an extension EJB, rather than by updating database tables, or running data migration scripts. Servers of the prior art often require the updating of the user database table schema for additional user properties.

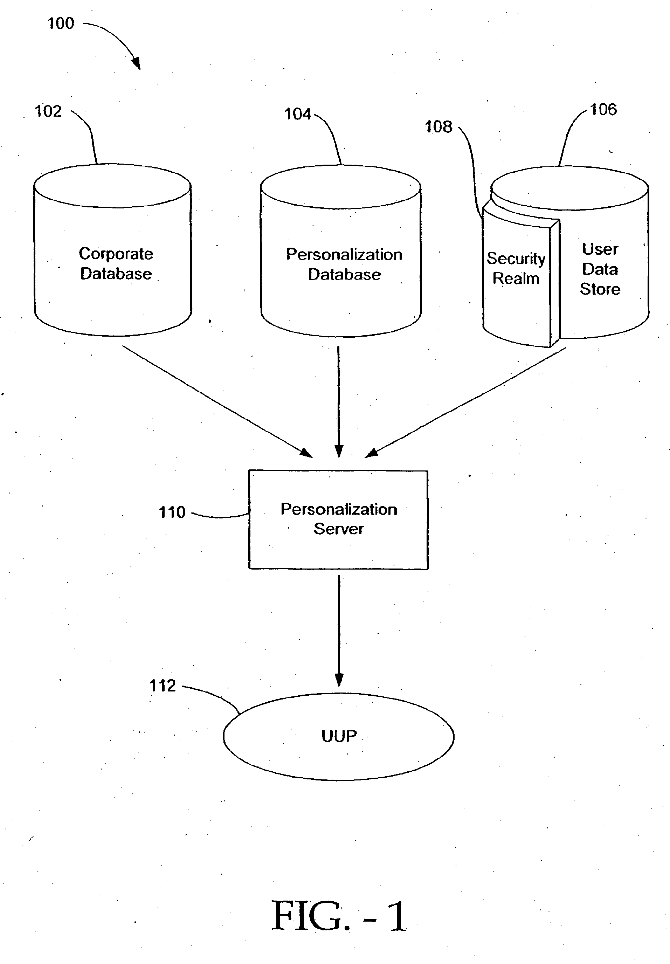

**Figures 1-4** show possible configurations for a UUP system of the present invention. In a first configuration **100** of **Figure 1****,** a corporate, legacy, or other external database **102** and personalization server database **104** provide property data to a personalization server **110.** The personalization server **110** also receives information from a user data store **106,** such as authentication information, user lists, group lists, and group membership. The user data store may be any appropriate system, such as an LDAP, Unix, or NT system as are known in the art. The user data store **106** also includes a security realm **108** for authentication. The personalization server database **104** and security realm **108** are kept separate in this configuration, as such separation of authentication and retrieval may be desirable, though not necessary to practice the invention. This configuration may be used where users and groups already exist in some type of data store, such as an LDAP directory. This existing user property data is then taken by the personalization server **110** and merged with the personalization data to generate the UUP **112.**

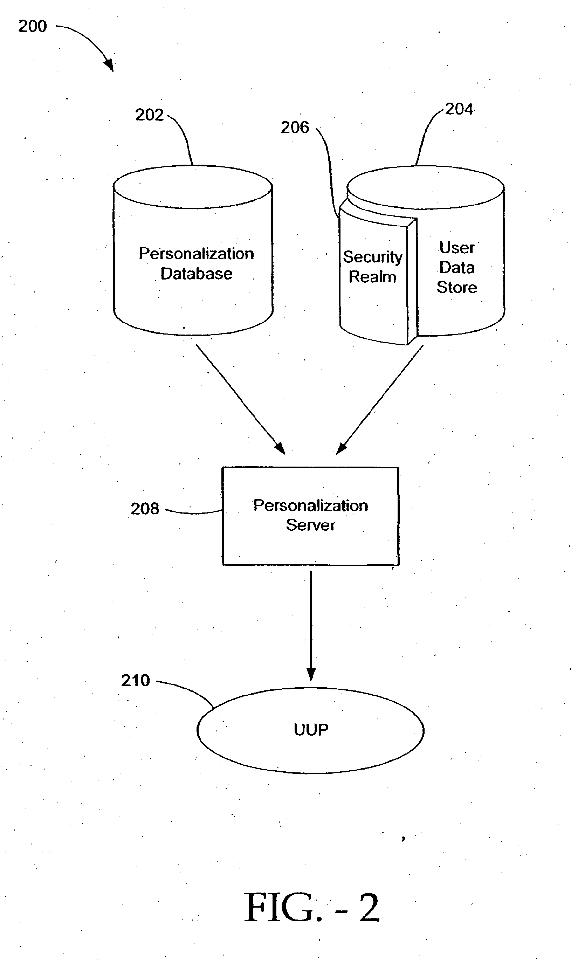

A second configuration **200,** as shown in **Figure 2****,** may be useful where users and groups already exist in a user data store **204,** such as an LDAP directory, and no existing user data must be incorporated into the UUP **210.** All user and group property data is then preferably stored in the tables of the personalization server **202** database. The personalization server **208** in this configuration still preferably utilizes a security realm **206** of the user data store **204.**

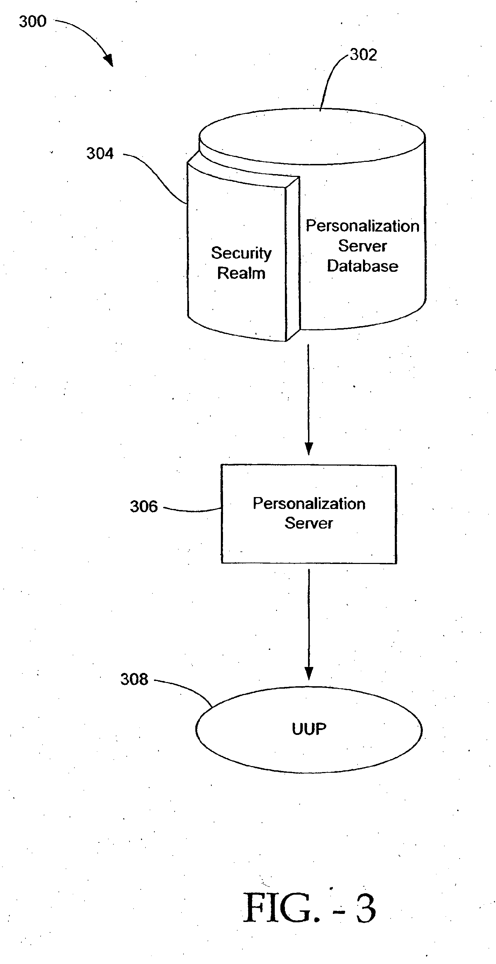

A third configuration **300,** shown in **Figure 3****,** may be useful where there is no existing store of users and groups. The tables of the personalization server database **302** contain all user and group data, as well as preferably housing a separated security realm **304.** The personalization server **306** then only need to look to the personalization server database **302** in generating the UUP **308.**

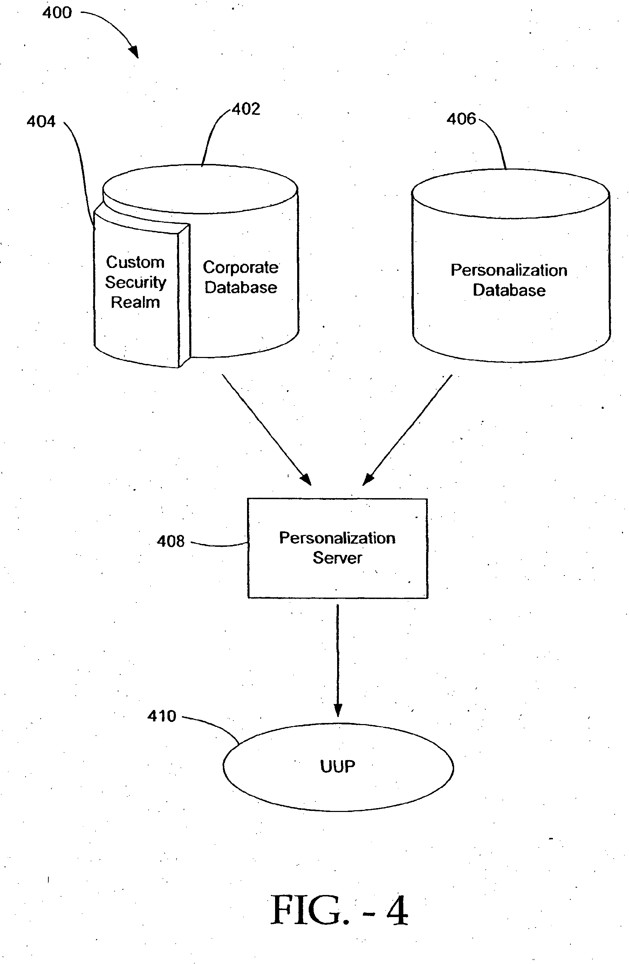

A fourth configuration **400,** shown in **Figure 4****,** may be useful where user, group, and property data are in an existing corporate, legacy, or other external database **402** and must be incorporated into the UUP **410** by the personalization server **408.** A custom security realm **404** must then be created in order to use the existing users and groups with the personalization server. The custom security realm need not necessarily be stored with the external database **402,** but may be incorporated into the personalization database **406.** Again, the retrieval and authentication realms are preferably kept separate.

One embodiment of an architecture of the present invention relies on three primary contributors for incorporating data in a UUP: (1) a base user enterprise java bean (EJB), (2) an user data store, and (3) a user-specific enterprise java bean (EJB).

A base user EJB is a Java class which is preferably extended by a personalization customer to incorporate existing user data into the personalization solution.

The base user EJB preferably provides a single, transparent interface through which both implicit properties and explicit properties can be retrieved or updated. The base user EJB utilizes a property set, which may be used to give namespace qualifications to properties, as well as to define property types, allowable values, etc. A property set acts like a data schema for user properties. As used herein, transparency generally refers to the fact that a user or application can make a call or request without care as to where the data is stored or what naming convention the data may use. If the data is in a legacy database instead of a personalization database, the UUP will automatically process the request without the user or application ever needing to know about the location or name.

In one embodiment of the invention, subclasses of the base User EJB use two methods to retrieve or update: getProperty and getProperty. These methods may retrieve and/or update both implicit and explicit properties. The methods may be set as follows:
public Object getProperty(String propertySetName, String propertyName);
public void setProperty(String propertySetName, String propertyName, Object propertyValue);

These methods preferably use two primary attributes: propertySetName and propertyName. The propertySetName attribute specifies the data schema to which the invocation applies. In this way, the propertySetName acts as a namespace for the property that is to be retrieved or updated. The propertyName attribute specifies the name of the property to be updated or retrieved. One advantage of the using the propertySetName-propertyName pair is that a single propertyName may be used across multiple applications, or sub-application scopes. The multiple instances of the property names may also correspond to differing definitions. Properties retrieved from the base User bean shall be referred to as *implicit properties.*

The user data store, which may be in existence prior to the incorporation, is typically a database or table where data is held that may relate to current users or customer data. This table may be colocated in a database instance of the personalization server. The existing user data store may hold user data which exists independent of the personalization server database tables. The personalization server may require the existing user data store to live in the same RDBMS instance as the personalization server tables.

An example "AcmeCustomer" RDBMS table is shown in Table 1. This table defines three values for each customer: (1) Customer_Name, (2) Acme_Points, and (3) Acme_Discount. Customer_Name is used as a unique identifier for each customer. This unique identifier, once integration is complete, is preferably used to uniquely identify a user throughout the Personalization server. Acme_Points is a sample customer value. An Acme customer might collect points as he or she makes purchases of Acme products. Acme_Discount is the discount the customer receives on each Acme product purchase.

**Table 1 - AcmeCustomer RDBMS table**

| **Customer_Name** | **Acme_Points** | **Acme_Discount** |
|---|---|---|
| bsmith | 50000 | 0.2 |
| jpatadia | 100000 | 0.1 |
| ughandi | 85000 | 0.15 |
| mbisson | 65000 | 0.3 |
| kdickson | 32000 | 0.05 |
| tstamm | 200000 | 0.2 |
| tcook | 100000 | 0.1 |

Once the existing data store is fully understood, an EJB that extends the base user EJB can be written, which takes advantage of the transparent value retrieval and update services. Methods of extending Java beans should be well known to persons skilled in the computer arts.

To integrate the existing user data with personalization tables provided with a personalization server, an EJB may be written to extend the user bean, which may be provided with the personalization server. Once this bean is completed, the personalization server client has transparent read and write access to properties previously stored in the user-specific database table (*explicit properties*), and to properties stored in the set of property tables of the Personalization server (*implicit properties*).

Continuing with the example "Acme Customer" data store, an AcmeUser EJB may be written that provides data update and retrieval mechanisms for the existing table. To operate within constraints of the present invention, the AcmeUser EJB may define the following methods:
- public Long getAcmePoints() - Returns the number of Acme points collected to date by the customer.
- public void setAcmePoints(Long newAcmePointsValue) - Updates the number of Acme points for the customer.
- public Double getAcmeDiscount() - Returns the current discount for the customer.
- public void setAcmeDiscount() - Updates the customer's Acme discount.

### Properties retrieved from the extended user bean are called explicit properties.

Once the methods of the extended bean are implemented, both the Acme points and the Acme discount may be retrieved with the inherited getProperty() and setProperty() methods implemented by the base User EJB.

Therefore, for example user *bsmith,* the following two methods would both return a Long containing the value 50000:
public Long getAcmePoints();
public Object getProperty (anyPropertySetName, "acmePoints");

Likewise, each of the following methods would update the Acme points value for *bsmith* to 60,000:
public void setAcmePoints (new Double(60000));
public void setProperty (anyPropertySetName, "acmePoints", new Double(60000));

In its implementation of transparent property update and retrieval, the UUP preferably uses the notion of Java reflection to determine whether a property is explicit before treating the property as *implicit* and employing the notion of Property Sets. Reflection is a feature of the Java programming language that allows an executing Java program to examine or introspect upon itself in order to manipulate internal properties of the program. An *explicit* property is preferably updated or retrieved before an implicit property, if the propertyName corresponds to an *explicit* property. Because of this search order, the actual property set name is of no consequence if an *explicit* property is being updated or retrieved.

The following example demonstrates a fictitious company's use of the UUP to take advantage of existing customer data. The example extends the User bean and retrieves data from a preexisting database. This example shows how, with relative ease, a customized UUP can be created that meets an application's persistence needs. The following table, Table 2, explains what may be extended in order to create a custom UUP.

**Table 2 - Sample Extensions to create a custom UUP**

| **Object** | **Must Extend** |
|---|---|
| **UUP Primary Key** | UserPk--with no key fields added. |
| **UUP EJB Interface** | User |
| **UUP EJB Implementation** | Userlmpl |

The fact that a UUP is a ConfigurableEntity means that user profiles have the notion of setting and getting a property explicitly or implicitly. Explicitly setting a property as used herein means calling a setter method for a property directly. Implicitly setting a property means setting a property via the setProperty() method where no explicit setter method is available. For example, if a UUP contains a "userPoints" property, calling setUserPoints() directly would explicitly set the userPoints property. Calling setProperty() with the "userPoints" key would implicitly set the userPoints property. When called, setProperty() first looks for a setUserPoints() setter method to call in the user profile. If such a setter method exists, the method is called to set the property and do whatever is necessary regarding the change in value. Ultimately, it is the responsibility of the UUP implementation to persist explicitly-set property values, even if they are implicitly called via setProperty(). ConfigurableEntity preferably handles persisting implicitly set properties only where no explicit setter method exists.

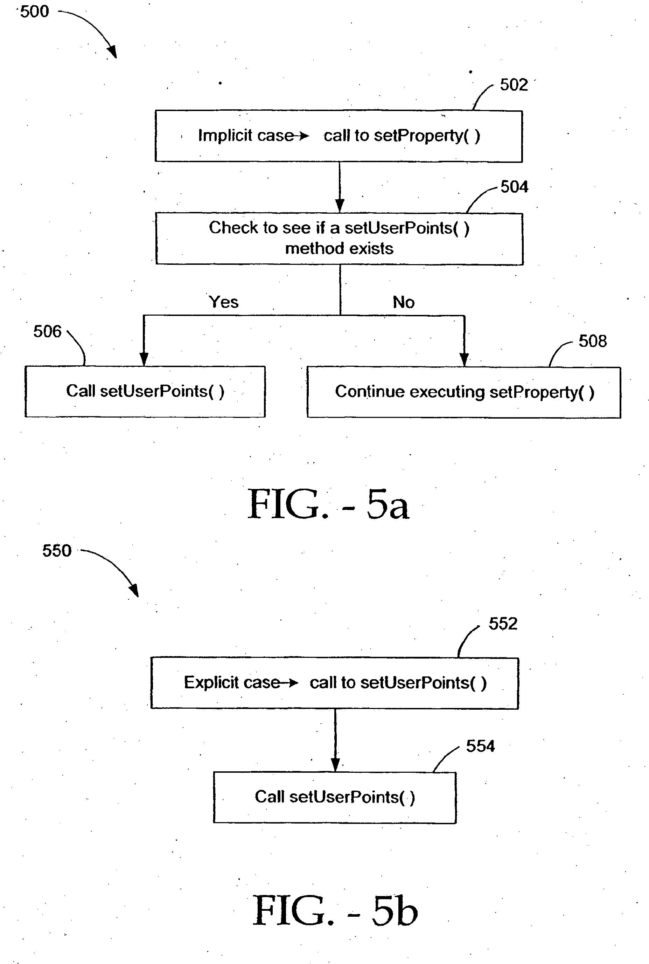

**Figures 5(a)** and **5(b)** diagram both an explicit **550** and implicit **500** call to setUserPoints(), respectively. In both cases, it is the responsibility of the UUP bean to store the userPoints value. If no setUserPoints() method had existed in the UUP bean, the ConfigurableEntity implementation would have handled storing the userPoints value. In the Implicit case of **Figure 5a****,** a call is made to setProperty() **502.** The system checks to see if a setUserPoints() method exists **506.** If so, setUserPoints() is called **506.** If not, the system continues executing setProperty **510.** For the explicit case of **Figure 5b****,** a call made to setUserPoints() **552** will simply call setUserPoints() **554.**

This notion of implicitly and explicitly setting properties allows for additional flexibility in UUP implementation. If any special logic needs to happen during the setting or getting of a property, such as the calculation of another value, it may be done using a setter or getter method for that property. Functionality external to the UUP may count on having a setProperty() method and getProperty() method for property access, eliminating any need to know whether a property has its own setter or getter. For example, a <um:getproperty> JSP tag may retrieve a userPoints property value even if a getUserPoints() method is the only way provided by the UUP to retrieve userPoints. This is because a getProperty() method of the UUP may first check to see if it has a getUserPoints() method before checking elsewhere. Properties that have an explicit set PropertyName() and get PropertyName() method are referred to as "explicit properties", while properties that can only be set through a call to setProperty() are referred to as "implicit properties".

When implementing a custom UUP EJB, it may only be necessary to implement explicit getter and setter methods for the explicit properties for the UUP. Implementations of these setters and getters would then set and retrieve the property values in the existing data store.

In one embodiment, a get PropertyName() / set PropertyName() approach is followed for all explicit property setting and getting in a UUP. If a UUP has an explicit userPoints property, an explicit getUserPoints() method is provided, as retrieveUserPoints() would not work. Similarly, setting userPoints is done with a setUserPoints() method. In this embodiment, the getProperty() and setProperty() methods look for getters and setters that follow this convention when getting and setting properties via implicit calls. Overriding setProperty() or getProperty() is not permitted. The getting and setting of explicit properties is done through getter and setter methods. Explicit getters and setters take and return objects. Primitives such as long and float are wrapped, such as in java.lang.Long and java.lang.Float objects, to be compatible with ConfigurableEntity's getProperty() and setProperty() methods.

If a getter method is provided, it may be a good idea to provide a setter method, and vice versa, as it cannot be predicted when a user or application will try to set or get a property. For example, if a getter is provided that retrieves a property from a database table without a corresponding setter, a call to setProperty() will store that property in a Personalization Server table. This is undesirable, as the value is retrieved from one place and set in another. The next time the property is retrieved, it would have its original value - not the value that was set. If a read-only property is to be provided, an empty setter method may be implemented.

A preferred definition of ConfigurableEntity's getProperty method is as follows:
public Object getProperty(String *propertySet,*
   String *propertyName,*
   ConfigurableEntity *explicitSuccessor,*
   Object *defaultValue*);

The getProperty() method preferably searches for properties in a specific order. For example, if a property is not found for a User, a Group may be queried for the value. In this case the User would inherit the property value from a Group. In ConfigurableEntityterms, the Group would be the User's "successor". If a property is not found in a ConfigurableEntity, then the successor to ConfigurableEntity may be queried. This way, ConfigurableEntities can inherit and override values from a parent entity.

Successors can be either implicit or explicit. An implicit successor is a default successor to a ConfigurableEntity, or a successor that is set for a specific Property Set. An explicit successor is preferably a ConfigurableEntity that may be passed as a parameter to the getProperty() method. Following is the order of the getProperty() property search as it exists in a preferred ConfigurableEntity:
- Look in the entity for the property for the specified Property Set.
- Look in the entity for the property in the default (null) Property Set.
- Look in the entity for the property in the Reserved Property Set (for properties from LDAP if using the LDAPRealm).
- Look for the property in the entity's explicit successor (if specified).
- Look for the property in the entity's successor for the specified Property Set.
- Look for the property in the entity's default successor.
- Look for a default value as defined in the Property Set if the Property Set is specified (not null).
- Return the defaultValue passed into the getProperty() method.

A preferred definition of ConfigurableEntity's setProperty() method is as follows:
public Object setProperty(String *propertySet,*
   String *propertyName,*
   Object *value*);

If, in this preferred method, setProperty() is used to set a property for a Property Set that is inconsistent with the Property Set definition, an exception may be thrown. For example, suppose a "UnifiedUserExample" Property Set is defined that has a userPoints property of type Integer. If someone tries to set the userPoints property for the "UnifiedUserExample" Property Set to be "abc" an exception would be thrown because userPoints is defined as being of type Integer and "abc" is text. Similarly, setting a Boolean property value to "bar" would result in an exception because Boolean values are restricted to Boolean objects.

If setProperty() is called and null is passed for the Property Set, the property value may be set in the null Property Set, referred to as the default Property Set. As described previously in the search order of getProperty(), the default property set is preferably searched before looking for the property value in the "Reserved" Property Set and successor.

The "Reserved" Property Set is preferably a read-only Property Set that may be used to hold property values from an external datastore. The "Reserved" Property Set may be used in the Personalization Server, such as when properties are retrieved from an LDAP directory. Attempting to set a property in the "Reserved" Property Set may result in an exception being thrown. Properties in the "Reserved" Property Set and the Reserved Property Set itself may not be editable via User Management tools. Preferred User Management tools allow the specification of attributes to be retrieved from an LDAP or other server for users and groups. These attributes may then be the only ones retrieved at runtime.

Properties may be set via setProperty() with a Property Set specified that does not exist. This may be undesirable. When done, a Property Set is not created "on-the-fly" for the specified Property Set name. Rather, the specified Property Set name serves only as a namespace for the property. Similarly, it may be undesirable to set. a property via setProperty() for an existing Property Set, specifying a property that does not exist for that Property Set. Properties set in either of these ways may not be editable through the User Management tools, while properties in the "null" or "default" property set may be editable.

A call to getProperty() preferably returns a java.lang.Long object if setProperty() is called passing a java.lang.Integer object value. Code retrieving such a property may be written as follows:
Object value = myUser.getProperty("my_property_set";
   "my_integer_property",
   null,
   null);
Number *tempNumber* = (Number) value;
   int *realValue* =
tempNumber.intValue();

A call to getProperty() preferably returns a java.lang.Double object if setProperty() is called with a java.lang.Float object. Code retrieving such a property may be written as follows:
Object value = myUser.getProperty("my_property_set",
   "my_float_property",
   null,
   null);
Number *tempNumber* = (Number) value;
float *realValue* = tempNumber.floatValue();

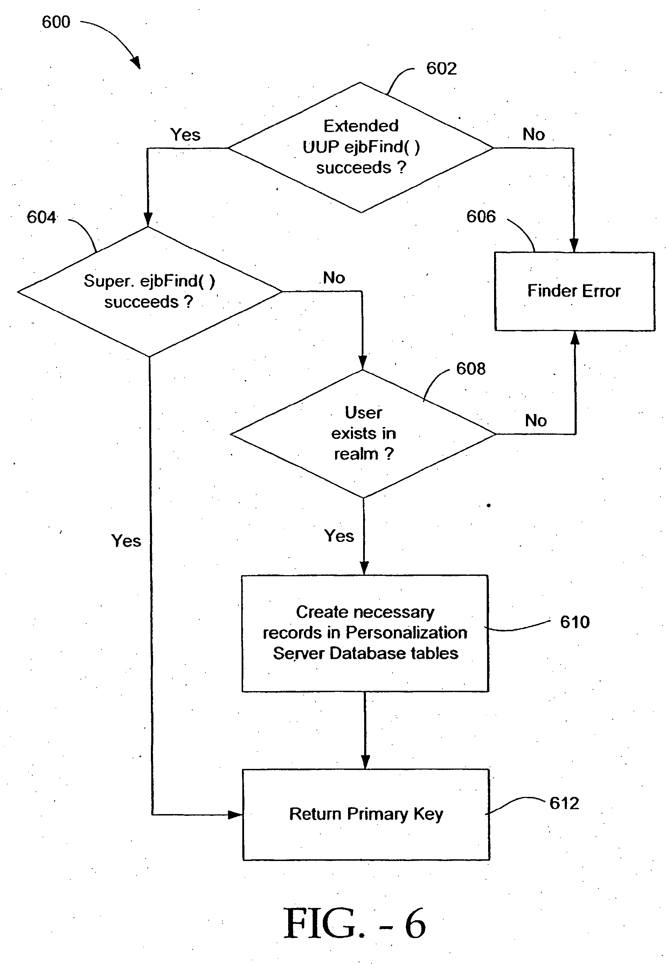

A User object preferably offers functionality for EJB find operations that makes integrating a UUP with the Personalization Server easy. **Figure 6** shows a flowchart for an ejbFind() operation. An extended UUP ejbFind() searches for records in the existing data store **602.** If successful, a call will be made to super.ejbFind() **604,** the User object ejbFind(). If successful, the User object ejbFind() will create the necessary records for the UUP in the Personalization Server database tables if they do not yet exist **610** and return the appropriate primary key. If the User object ejbFind() fails, it may check the underlying security realm 608 to determine whether the username corresponds to a valid user. If so, the User object ejbFind() creates the necessary records **610,** thereby eliminating finder errors and the time needed initially to migrate user data into the Personalization Server User database tables. If either ejbFind() fails or the user does not exist in the realm, a Finder Error is encountered **606.** If no Finder Error is encountered, the appropriate primary key is returned **612.**

If the configuration is one such that the realm cannot verify the existence of the user, but the user must be created, it may be the responsibility of the EJB to create superclass records that are not found initially.

The last step in one embodiment of creating a custom UUP requires the UUP to be registered with a personalization or other server, such as through user management tools. In order to register the UUP, preferred user management tools utilize the following, in Table 3:

**Table 3 - Registering the UUP (example)**

| **Profile Type Name** | **Arbitrary name that is later used to refer to the profile type through the User Management system's <*um:getprofile*> JSP extension tag** |
|---|---|
| *Profile Home Class* | The home class of the new profile type |
| *Profile Remote Interface* | The remote interface of the new profile type |
| *Profile Primary Key Class* | The primary key class of the new profile type |
| *Profile JNDI Name* | The JNDI lookup name of the new profile type |

By registering the UUP with the Personalization Server, it becomes possible to ask for the new profile type with the <um:getprofile> JSP tag:
<um:getprofile profileType="UnifiedUserExample"
profileKey="<%=username%>"/>

It is then possible to use the <um:getproperty> and <um:setproperty> JSP tags with the UUP.

### LDAP Property Retrieval Support

In addition to the transparent retrieval/update of implicit and explicit properties, one embodiment of a unified user profile mechanism facilitates the retrieval of user information from an LDAP server, with no Java code required from the personalization server customer. A set of administration tools allows specification of user and group properties to be retrieved from the LDAP server at a property request during application run time. Preferably, the only requirement of the Personalization Server customer for LDAP property retrieval is that the customer employ an LDAP security realm. At runtime, the UUP queries certain configuration information to detect whether the LDAP security realm is currently in use. If so, the names of the user and group properties to be retrieved may be obtained from an LDAPConfiguration session EJB, and the appropriate properties for the current user retrieved. The customer may not be required to use the LDAP security realm to receive the benefit of other UUP capabilities.

Other features, aspects and objects of the invention can be obtained from a review of the figures and the claims. It is to be understood that other embodiments of the invention can be developed and fall within the scope of the invention and claims.

The foregoing description of preferred embodiments of the present invention has been provided for the purposes of illustration and description. It is not intended to be exhaustive or to limit the invention to the precise forms disclosed. Obviously, many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A method for generating a unified user profile (112) for providing to a user or application transparent access to a personalization database (104) and external user database (102), said method comprising the steps of:
(a) obtaining a base user java bean adapted to work through a personalization server to access said personalization database, wherein said base user java bean provides a transparent interface to a user or application through which implicit and explicit properties can be retrieved from and updated in the personalization database independent of any knowledge of the user or application of the naming convention of data in the personalization database; and
(b) generating a unified user profile by creating an enterprise java bean to extend the base user Java bean such that said implicit and explicit properties can further be, by using methods inherited by the enterprise java bean from the base user java bean, transparently retrieved from and updated in, using the enterprise java bean, both the personalization database and an external user database independent of any knowledge of the user or application of the naming convention of data in the external user database;
wherein the unified user profile allows the user or application to access data in the personalization database and the external user database independent of any knowledge of whether the accessed data is in the personalization database or the external user database; and
wherein the enterprise java bean uses a property set, said property set adapted to give namespace qualifications to implicit and explicit properties of said data in said personalization database such that a single property name may be used across multiple applications.

2. The method of claim 1, further comprising:
obtaining a security realm adapted to allow authentication of data in said personalization database and said external user database.

3. A computer readable medium containing instructions which, when executed by a server, cause the server to perform the steps of:
(a) obtaining a base user java bean adapted to work through a personalization server to access said personalization database, wherein said base user java bean provides a transparent interface to a user or application through which implicit and explicit properties can be retrieved from and updated in the personalization database independent of any knowledge of the user or application of the naming convention of data in the personalization database; and
(b) generating a unified user profile by creating an enterprise java bean to extend the base user java bean such that said implicit and explicit properties can further be, by using methods inherited by the enterprise java bean from the base user java bean, transparently retrieved from and updated in, using the enterprise java bean, both the personalization database and an external user database independent of any knowledge of the user or application of the naming convention of data in the external user database;
wherein the unified user profile allows the user or application to access data in the personalization database and the external user database independent of any knowledge of whether the accessed data is in the personalization database or the external user database; and
wherein the enterprise java bean uses a property set, said property set adapted to give namespace qualifications to implicit and explicit properties of said data in said personalization database such that a single property name may be used across multiple applications.

4. A computer-based system for use in generating a unified user profile (112) for providing transparent access to a personalization database (104) and an external user database (102), comprising:
a base user java bean adapted to work through a personalization server to access said personalization database, wherein said base user java bean provides a transparent interface to a user or application through which implicit and explicit properties can be retrieved from and updated in the personalization database independent of any knowledge of the user or application of the naming convention of data in the personalization database;
an enterprise java bean that extends the base user java bean such that said implicit and explicit properties can further be transparently retrieved from and updated in an external user database, wherein the access is carried out independent of any knowledge of the user or application of the naming convention of data in the external user database;
wherein the enterprise java bean allows the user or application to access data in the personalization database and the external user database independent of any knowledge of the data's location;
wherein the enterprise java bean uses a property set, said property set adapted to give namespace qualifications to implicit and explicit properties of said data in said personalization database such that a single property name may be used across multiple applications; and
wherein the system further comprises a means of obtaining a security realm adapted to allow authentication of data in said personalization database and said external user database.

## Patentansprüche

1. Verfahren zum Erzeugen eines vereinheitlichten Anwenderprofils (112) zum Bereitstellen eines transparenten Zugangs zu einer Personalisierungsdatenbank (104) und einer externen Anwenderdatenbank (102) für einen Anwender oder eine Anwendung, wobei das Verfahren die folgenden Schritte umfasst:
(a) Erhalten einer Basisanwender-Java-Bean, die dafür ausgelegt ist, sich durch einen Personalisierungsserver zu arbeiten, um auf die Personalisierungsdatenbank zuzugreifen, wobei die Basisanwender-Java-Bean eine transparente Schnittstelle für einen Anwender oder eine Anwendung bereitstellt, durch die implizite und explizite Eigenschaften von der Personalisierungsdatenbank abgefragt und in ihr aktualisiert werden können, unabhängig von einer Kenntnis des Anwenders oder der Anwendung der Benennungskonvention der Daten in der Personalisierungsdatenbank, und
(b) Erzeugen eines vereinheitlichten Anwenderprofils durch Erzeugen einer Enterprise-Java-Bean, um die Basisanwender-Java-Bean so zu erweitern, dass die impliziten und expliziten Eigenschaften durch die Verwendung von Verfahren, die die Enterprise-Java-Bean von der Basisanwender-Java-Bean übernimmt, ferner unter Verwendung der Enterprise-Java-Bean transparent sowohl von der Personalisierungsdatenbank als auch einer externen Anwenderdatenbank abgefragt und in ihnen aktualisiert werden können, unabhängig von einer Kenntnis des Anwenders oder der Anwendung der Benennungskonvention der Daten in der externen Anwenderdatenbank;
wobei das vereinheitlichte Anwenderprofil dem Anwender oder der Anwendung erlaubt, auf Daten in der Personalisierungsdatenbank und der externen Anwenderdatenbank zuzugreifen, unabhängig von einer Kenntnis, ob die zugegriffenen Daten in der Personalisierungsdatenbank oder der externen Anwenderdatenbank sind, und
wobei die Enterprise-Java-Bean eine Eigenschaftsgruppe verwendet, wobei die Eigenschaftsgruppe dafür ausgelegt ist, Namensraumqualifikationen an die impliziten und expliziten Eigenschaften der Daten in der Personalisierungsdatenbank zu geben, so dass ein einzelner Eigenschaftsname über mehrere Anwendungen verwendet werden kann.

2. Verfahren nach Anspruch 1, das ferner Folgendes umfasst:
Erhalten eines Sicherheitsbereichs, der dafür ausgelegt ist, eine Authentifizierung der Daten in der Personalisierungsdatenbank und der externen Anwenderdatenbank zu erlauben.

3. Computerlesbares Medium, das Anweisungen enthält, die dann, wenn sie durch einen Server ausgeführt werden, verursachen, dass der Server die folgenden Schritte ausführt:
(a) Erhalten einer Basisanwender-Java-Bean, die dafür ausgelegt ist, sich durch einen Personalisierungsserver zu arbeiten, um auf die Personalisierungsdatenbank zuzugreifen, wobei die Basisanwender-Java-Bean eine transparente Schnittstelle für einen Anwender oder eine Anwendung bereitstellt, durch die implizite und explizite Eigenschaften von der Personalisierungsdatenbank abgefragt und in ihr aktualisiert werden können, unabhängig von einer Kenntnis des Anwenders oder der Anwendung der Benennungskonvention der Daten in der Personalisierungsdatenbank, und
(b) Erzeugen eines vereinheitlichten Anwenderprofils durch Erzeugen einer Enterprise-Java-Bean, um die Basisanwender-Java-Bean so zu erweitern, dass die impliziten und expliziten Eigenschaften durch die Verwendung von Verfahren, die die Enterprise-Java-Bean von der Basisanwender-Java-Bean übernimmt, ferner unter Verwendung der Enterprise-Java-Bean transparent sowohl von der Personalisierungsdatenbank als auch einer externen Anwenderdatenbank abgefragt und in ihnen aktualisiert werden können, unabhängig von einer Kenntnis des Anwenders oder der Anwendung der Benennungskonvention der Daten in der externen Anwenderdatenbank;
wobei das vereinheitlichte Anwenderprofil dem Anwender oder der Anwendung erlaubt, auf Daten in der Personalisierungsdatenbank und der externen Anwenderdatenbank zuzugreifen, unabhängig von einer Kenntnis, ob die zugegriffenen Daten in der Personalisierungsdatenbank oder der externen Anwenderdatenbank sind, und
wobei die Enterprise-Java-Bean eine Eigenschaftsgruppe verwendet, wobei die Eigenschaftsgruppe dafür ausgelegt ist, Namensraumqualifikationen an die impliziten und expliziten Eigenschaften der Daten in der Personalisierungsdatenbank zu geben, so dass ein einzelner Eigenschaftsname über mehrere Anwendungen verwendet werden kann.

4. Computerbasiertes System zur Verwendung beim Erzeugen eines vereinheitlichten Anwenderprofils (112), um einen transparenten Zugriff auf eine Personalisierungsdatenbank (104) und eine externe Anwenderdatenbank (102) bereitzustellen, das Folgendes umfasst:
eine Basisanwender-Java-Bean, die dafür ausgelegt ist, sich durch einen Personalisierungsserver zu arbeiten, um auf die Personalisierungsdatenbank zuzugreifen, wobei die Basisanwender-Java-Bean eine transparente Schnittstelle für einen Anwender oder eine Anwendung bereitstellt, durch die implizite und explizite Eigenschaften von der Personalisierungsdatenbank abgefragt und in ihr aktualisiert werden können, unabhängig von einer Kenntnis des Anwenders oder der Anwendung der Benennungskonvention der Daten in der Personalisierungsdatenbank,
eine Enterprise-Java-Bean, die die Basisanwender-Java-Bean so erweitert, dass die impliziten und expliziten Eigenschaften ferner transparent von einer externen Anwenderdatenbank abgefragt und in ihr aktualisiert werden können, wobei der Zugriff unabhängig von einer Kenntnis des Anwenders oder der Anwendung der Benennungskonvention der Daten in der externen Anwenderdatenbank ausgeführt wird;
wobei die Enterprise-Java-Bean erlaubt, dass der Anwender oder die Anwendung auf die Daten in der Personalisierungsdatenbank und der externen Anwenderdatenbank zugreift, unabhängig von einer Kenntnis des Orts der Daten;
wobei die Enterprise-Java-Bean eine Eigenschaftsgruppe verwendet, wobei die Eigenschaftsgruppe dafür ausgelegt ist, Namensraumqualifikationen an die impliziten und expliziten Eigenschaften der Daten in der Personalisierungsdatenbank zu geben, so dass ein einzelner Eigenschaftsname über mehrere Anwendungen verwendet werden kann, und
wobei das System ferner ein Mittel zum Erhalten eines Sicherheitsbereichs umfasst, das dafür ausgelegt ist, eine Authentifizierung der Daten in der Personalisierungsdatenbank und der externen Anwenderdatenbank zu erlauben.

## Revendications

1. Procédé de génération d'un profil d'utilisateur unifié (112) pour fournir à un utilisateur ou à une application un accès transparent à une base de données de personnalisation (104) et à une base de données d'utilisateur externe (102), ledit procédé comprenant les étapes consistant à :
(a) obtenir un JavaBean d'utilisateur de base adapté pour travailler par le biais d'un serveur de personnalisation pour accéder à ladite base de données de personnalisation, ledit JavaBean d'utilisateur de base fournissant une interface transparente à un utilisateur ou une application par laquelle des propriétés implicites et explicites peuvent être recouvrées et actualisées dans la base de données de personnalisation indépendamment de toute connaissance de l'utilisateur ou de l'application de la convention de nommage des données dans la base de données de personnalisation ; et
(b) générer un profil d'utilisateur unifié en créant un Enterprise JavaBean pour étendre le JavaBean d'utilisateur de base de telle sorte que lesdites propriétés implicites et explicites puissent en outre, en utilisant des procédés hérités par l'Enterprise JavaBean à partir du JavaBean d'utilisateur de base, être recouvrées de façon transparente depuis, et actualisées dans, en utilisant l'Enterprise JavaBean, à la fois la base de données de personnalisation et une base de données d'utilisateur externe indépendamment de toute connaissance de l'utilisateur ou de l'application de la convention de nommage des données dans la base de données d'utilisateur externe ;
dans lequel le profil d'utilisateur unifié permet à l'utilisateur ou à l'application d'accéder à des données dans la base de données de personnalisation et la base de données d'utilisateur externe indépendamment de toute connaissance de l'emplacement des données sollicitées, à savoir dans la base de données de personnalisation ou dans la base de données d'utilisateur externe ; et
dans lequel l'Enterprise JavaBean utilise un ensemble de propriétés, ledit ensemble de propriétés étant adapté pour donner des qualifications d'espace de nom à des propriétés implicites et explicites desdites données dans ladite base de données de personnalisation de telle sorte qu'un seul nom de propriété puisse être utilisé dans de multiples applications.

2. Procédé selon la revendication 1, comprenant en outre l'étape consistant à :
obtenir un Realm de sécurité pour permettre l'authentification de données dans ladite base de données de personnalisation et ladite base de données d'utilisateur externe.

3. Support lisible par ordinateur contenant des instructions qui, lorsqu'elles sont exécutées par un serveur, amènent le serveur à exécuter les étapes consistant à :
(a) obtenir un JavaBean d'utilisateur de base adapté pour travailler par le biais d'un serveur de personnalisation pour accéder à ladite base de données de personnalisation, ledit JavaBean d'utilisateur de base fournissant une interface transparente à un utilisateur ou une application par laquelle des propriétés implicites et explicites peuvent être recouvrées et actualisées dans la base de données de personnalisation indépendamment de toute connaissance de l'utilisateur ou de l'application de la convention de nommage des données dans la base de données de personnalisation ; et
(b) générer un profil d'utilisateur unifié en créant un Enterprise JavaBean pour étendre le JavaBean d'utilisateur de base de telle sorte que lesdites propriétés implicites et explicites puissent en outre, en utilisant des procédés hérités par l'Enterprise JavaBean à partir du JavaBean d'utilisateur de base, être recouvrées de façon transparente depuis, et actualisées dans, en utilisant l'Enterprise JavaBean, à la fois la base de données de personnalisation et une base de données d'utilisateur externe indépendamment de toute connaissance de l'utilisateur ou de l'application de la convention de nommage des données dans la base de données d'utilisateur externe ;
dans lequel le profil d'utilisateur unifié permet à l'utilisateur ou à l'application d'accéder à des données dans la base de données de personnalisation et la base de données d'utilisateur externe indépendamment de toute connaissance de l'emplacement des données sollicitées, à savoir dans la base de données de personnalisation ou dans la base de données d'utilisateur externe ; et
dans lequel l'Enterprise JavaBean utilise un ensemble de propriétés, ledit ensemble de propriétés étant adapté pour donner des qualifications d'espace de nom à des propriétés implicites et explicites desdites données dans ladite base de données de personnalisation de telle sorte qu'un seul nom de propriété puisse être utilisé dans de multiples applications.

4. Système basé sur ordinateur destiné à être utilisé dans la génération d'un profil d'utilisateur unifié (112) pour fournir un accès transparent à une base de données de personnalisation (104) et une base de données d'utilisateur externe (102), comprenant :
un JavaBean d'utilisateur de base adapté pour travailler par le biais d'un serveur de personnalisation pour accéder à ladite base de données de personnalisation, ledit JavaBean d'utilisateur de base fournissant une interface transparente à un utilisateur ou une application par laquelle des propriétés implicites et explicites peuvent être recouvrées et actualisées dans la base de données de personnalisation indépendamment de toute connaissance de l'utilisateur ou de l'application de la convention de nommage des données dans la base de données de personnalisation ;
un Enterprise JavaBean qui étend le JavaBean d'utilisateur de base de telle sorte que lesdites propriétés implicites et explicites puissent en outre être recouvrées de façon transparente depuis, et actualisées dans une base de données d'utilisateur externe, dans lequel l'accès est effectué indépendamment de toute connaissance de l'utilisateur ou de l'application de la convention de nommage des données dans la base de données d'utilisateur externe ;
dans lequel l'Enterprise JavaBean permet à l'utilisateur ou à l'application d'accéder à des données dans la base de données de personnalisation et la base de données d'utilisateur externe indépendamment de toute connaissance de l'emplacement des données ;
dans lequel l'Enterprise JavaBean utilise un ensemble de propriétés, ledit ensemble de propriétés étant adapté pour donner des qualifications d'espace de nom à des propriétés implicites et explicites desdites données dans ladite base de données de personnalisation de telle sorte qu'un seul nom de propriété puisse être utilisé dans de multiples applications ; et
le système comprenant en outre un moyen d'obtention d'un Realm de sécurité adapté pour permettre l'authentification de données dans ladite base de données de personnalisation et ladite base de données d'utilisateur externe.
